# EUROPEAN PATENT APPLICATION

(11) **EP 4 556 206 A1**
(43) Date of publication of application: **21.05.2025**
(21) Application number: 23839416.7
(22) Date of filing: 21.06.2023
(51) Int. Cl.: B29C 70/30, B29C 70/16, B29C 70/54, B29K 105/08

(54) **METHOD FOR PRODUCING FIBER-BUNDLE-CONTAINING PRODUCT, AND FILAMENT WINDING APPARATUS**

(30) Priority: 14.07.2022 JP 2022113038
(71) Applicant: Murata Machinery, Ltd., Kyoto-shi, Kyoto 601-8326 (JP)
(72) Inventor: MIURA, Takahiro, Kyoto-shi, Kyoto 612-8686 (JP); DOI, Koichi, Kyoto-shi, Kyoto 612-8686 (JP); UOZUMI, Tadashi, Kyoto-shi, Kyoto 612-8686 (JP); IKEZAKI, Shu, Kyoto-shi, Kyoto 612-8686 (JP); NAKAMURA, Daigoro, Kyoto-shi, Kyoto 612-8686 (JP); NISHIDA, Tatsuhiko, Kyoto-shi Kyoto 612-8686 (JP); TANIGAWA, Motohiro, Kyoto-shi, Kyoto 612-8686 (JP)
(74) Representative: Weickmann & Weickmann PartmbB
(86) International application number: PCT/JP2023/022905
(87) International publication number: WO 2024/014241

(57) **Abstract**

Contamination of a product with a foreign matter is avoided in a filament winding apparatus which is configured to perform helical winding for product mandrels while continuously feeding the product mandrels.

The filament winding apparatus 1 includes a jig mandrel MJ, paired feeding units 2, and plural helical winding units 4. In the filament winding apparatus 1, a jig feeding step, a yarn placement step, a connecting step, and a helical-winding step are performed. In the jig feeding step, the jig mandrel MJ is fed to a helical winding unit 4. In the yarn placement step, a leading end portion of each of fiber bundles F is fixed to the outer circumferential surface of the jig mandrel MJ. In the connecting step, plural mandrels M (product mandrels) are serially connected to the jig mandrel MJ in a relatively non-rotatable manner. In the helical-winding step, helical-winding is serially performed for the connected mandrels M while the mandrels M are serially fed to the downstream side in the feeding direction.

## Description

### [Technical Field]

The present invention relates to a method for manufacturing a fiber bundle-containing product formed by winding a plurality of fiber bundles onto a mandrel, and to a filament winding apparatus for winding fiber bundles onto a mandrel.

### [Background Art]

The filament winding apparatus described in Patent Literature 1 includes a helical winding unit configured to helical-wind a fiber bundle onto a core material (mandrel). The helical winding unit supplies fiber bundles to the mandrel while rotating. This applies helical winding to the mandrel that is moving without rotating.

Patent Literature 2 discloses a technology for winding fiber bundles onto each of mandrels while continuously feeding the mandrels connected with each other in the mandrel axial directions, in a forward direction (i.e., toward the downstream side in a predetermined feeding direction).

### [Citation List]

### [Patent Literatures]

[Patent Literature 1] Japanese Laid-Open Patent Publication No. 2020-82375
[Patent Literature 2] Japanese Laid-Open Patent Publication No. 2014-117913

### [Summary of Invention]

### [Technical Problem]

In recent years, studies have been conducted to improve the efficiency of helical winding. For example, it is conceivable to arrange plural helical winding units, which are similar to the helical winding unit of Patent Literature 1, to be aligned in the mandrel axial direction, and to continuously feed plural mandrels connected as described in Patent Literature 2 to the downstream side in the feeding direction. This makes it possible to supply a large number of fiber bundles to the mandrel simultaneously.

Typically, when winding a fiber bundle onto a mandrel, it is necessary to fix the leading end of the fiber bundle to somewhere on the mandrel. When, in order to fix a leading end portion of a fiber bundle to a mandrel, the fiber bundle is wound onto around the leading end portion of the fiber bundle while the leading end portion is provided in the vicinity of the circumferential surface of the mandrel, problems such as irregular thickness of the fiber bundle layer and misalignment of the fiber bundles wound on the mandrel may occur. As a result, the quality of the product formed by the fiber bundles deteriorates. Furthermore, even when the leading end portion of the fiber bundle is fixed to the circumferential surface of the mandrel by using a means different from the fiber bundle, the quality of the product may deteriorate due to contamination of the product with a foreign matter different from the fiber bundle.

An object of the present invention is to avoid contamination of a product with a foreign matter in a filament winding apparatus which is configured to perform helical winding for product mandrels while continuously feeding the product mandrels.

### [Solution to Problem]

According to a first aspect of the invention, a manufacturing method of manufacturing fiber bundle-containing products including fiber bundles in a filament winding apparatus configured to wind the fiber bundles onto each of mandrels is arranged so that the filament winding apparatus includes: a jig mandrel which is shorter than the product mandrels in a predetermined mandrel axial direction; a feeding unit which is capable of serially feeding the jig mandrel and the product mandrels aligned in the mandrel axial direction and connected, from the upstream side to the downstream side in a predetermined feeding direction that is along the mandrel axial direction; and helical winding units which are aligned in the mandrel axial direction and each of which is capable of helical-winding the fiber bundles onto the jig mandrel and the product mandrels, and the manufacturing method includes: a jig feeding step of attaching the jig mandrel to the feeding unit and feeding the jig mandrel to a predetermined helical winding unit among the helical winding units; a yarn placement step of fixing a leading end portion of each of the fiber bundles fed from the predetermined helical winding unit to the jig mandrel, after the jig feeding step; a connecting step of serially aligning the product mandrels in the mandrel axial direction and connecting the product mandrels so as not to be relatively rotatable on the upstream side in the feeding direction of the jig mandrel, after the jig feeding step; and a helical-winding step of serially performing helical winding for the product mandrels by the helical winding units, while serially feeding the product mandrels connected in the connecting step to the downstream side in the feeding direction, after the yarn placement step.

According to this aspect of the present invention, after the leading end portion of each of the fiber bundles is fixed to the jig mandrel, the product mandrels are connected with each other so as not to be rotatable relative to each other on the upstream in the feeding direction of the jig mandrel, and are serially fed to the downstream side in the feeding direction. The helical-winding is performed for these product mandrels that are serially fed. This makes it possible to serially wind plural fiber bundles onto each of the plural product mandrels, while avoiding the contamination of the product formed by winding plural fiber bundles onto plural product mandrels with the leading end of the fiber bundles. Contamination of a product with a foreign matter is therefore avoided in a filament winding apparatus which is configured to perform helical winding for product mandrels while continuously feeding the product mandrels.

According to a second aspect of the invention, the manufacturing method of manufacturing fiber bundle-containing products according to the first aspect is arranged such that the helical-winding step includes: a first helical-winding step of winding the fiber bundles onto the product mandrels at a predetermined first winding angle; and a second helical-winding step of winding the fiber bundles onto the product mandrels at a second winding angle that is different from the first winding angle, and the manufacturing method further includes: a winding angle change jig feeding step of connecting the jig mandrel to an upstream end in the feeding direction of a first mandrel onto which the fiber bundles are wound last in the first helical-winding step among the product mandrels so that the jig mandrel and the first mandrel are relatively non-rotatable, and feeding the jig mandrel to the downstream side in the feeding direction; a winding angle change fixing step of fixing an intermediate part of each of the fiber bundles to the jig mandrel, after the winding angle change jig feeding step; and a winding angle change connecting step of connecting the jig mandrel with a second mandrel onto which the fiber bundles are wound first in the second helical-winding step among the product mandrels so that the jig mandrel and the second mandrel are relatively non-rotatable.

According to this aspect of the present invention, intermediate parts of the fiber bundles are fixed to the jig mandrel while the winding angles are changed. Therefore, it is possible to avoid the intermediate part of the fiber bundle, which has been bent for the purpose of changing the winding angle, from entering the product.

According to a third aspect of the invention, the manufacturing method of manufacturing fiber bundle-containing products according to the first or second aspect is arranged such that the feeding direction includes a horizontal component, the filament winding apparatus includes a mandrel supporter which supports an intermediate part in the mandrel axial direction of each of the product mandrels that are connected in the mandrel axial direction, and each time a unit feeding step of feeding a mandrel group including the product mandrels once from an upstream end to a downstream end in the feeding direction is performed for a predetermined first number of times which is at least once, angles of the product mandrels about the axes are changed for a predetermined angle that is different from a multiple of 360 degrees, in the next unit feeding step.

When the feeding direction includes a horizontal component, the product mandrels connected in the mandrel axial direction may bend downward due to the gravity. In the present invention, as the intermediate parts of the connected product mandrels are supported by the mandrel supporter, the bending is reduced or prevented. However, with this arrangement, the fiber bundles which are generally softer than the product mandrels are pushed from below by the mandrel supporter, and hence the fiber bundles wound onto the product mandrels tend to be distorted. There is therefore a risk of deformation of the product. According to the present invention, each time the unit feeding step is executed for the predetermined first number of times, the angles of the product mandrels about the axes are changed. On this account, each time the unit feeding step is executed for the first number of times, the position where the fiber bundle-containing product is supported from below by the mandrel supporter can be changed in the circumferential direction of the product mandrel. In other words, it is possible to reduce or prevent the fiber bundles deposited at the same position in the circumferential direction of the product mandrel from being repeatedly pressed from below by the mandrel supporter. Therefore, it is possible to reduce or prevent variations in degree of deformation in the circumferential direction of the product mandrel between the fiber bundles. It is therefore possible to reduce or prevent the deformation of the product.

According to a fourth aspect of the invention, the manufacturing method of manufacturing fiber bundle-containing products according to any one of the first to third aspects is arranged such that, in the jig feeding step, a predetermined first jig mandrel is used as the jig mandrel, and after the jig feeding step, the unit feeding step of feeding the mandrel group including the product mandrels once from the upstream end to the downstream end in the feeding direction is performed at least for a predetermined second number of times, and then a second jig mandrel that is thicker than the first jig mandrel is attached to the feeding unit.

A fiber bundle-containing product thickens as the winding of fiber bundles onto a product mandrel advances. When fiber bundles are further wound onto the thickened fiber bundle-containing product, the following problem may occur if a narrow first jig mandrel is simply used as the jig mandrel. That is to say, if the diameter of the first jig mandrel is significantly different from the diameter of the fiber bundle-containing product, there is a possibility that the winding angle of the fiber bundle wound onto the fiber bundle-containing product may deviate from the target angle, even if the winding angle of the fiber bundle wound onto the first jig mandrel is substantially identical with the target angle. In this way, there is a possibility that the adjustment of the winding angle of the fiber bundle wound onto the first jig mandrel may not be properly reflected to the winding angle of the fiber bundle wound onto the fiber bundle-containing product. According to the present invention, the second jig mandrel thicker than the first jig mandrel is attached to the feeding unit, under a predetermined condition. This makes it easy to cause the winding angle of the fiber bundle on the second jig mandrel to substantially match the winding angle of the fiber bundle on the thickened fiber bundle-containing product. On this account, it is possible to arrange the winding angle of the fiber bundle wound onto the fiber bundle-containing product to be as close to the target angle as possible.

According to a fifth aspect of the invention, a filament winding apparatus which is configured to wind fiber bundles onto each of mandrels includes: a jig mandrel which is shorter than the product mandrels in a predetermined mandrel axial direction; a feeding unit which is capable of serially feeding the jig mandrel and the product mandrels aligned in the mandrel axial direction and connected, from the upstream side to the downstream side in a predetermined feeding direction that is along the mandrel axial direction; and helical winding units which are aligned in the mandrel axial direction and each of which is capable of helical-winding the fiber bundles onto the jig mandrel and the product mandrels.

According to this aspect of the present invention, in the same manner as the first aspect of the invention, contamination of a product with a foreign matter is therefore avoided in a filament winding apparatus which is configured to perform helical winding for product mandrels while continuously feeding the product mandrels.

### [Brief Description of Drawings]

FIG. 1 is a perspective view of a filament winding apparatus related to an embodiment.
FIG. 2(a) is a side view of the filament winding apparatus, and FIG. 2(b) is a side view of a mandrel.
FIG. 3 is a block diagram showing an electrical structure of the filament winding apparatus.
FIG. 4(a) is a front view of the helical winding unit, and FIG. 4(b) is an enlarged view of one supplying bobbin and its surroundings.
FIG. 5(a) is a rear view of the helical winding unit, and FIG. 5(b) is a side view of the helical winding unit.
FIG. 6 (a) and FIG. 6(b) are side views of a jig mandrel.
FIGs. 7(a) and 7(b) show a connecting portion viewed in a mandrel axial direction.
FIG. 8(a) to FIG. 8(c) are explanatory diagrams illustrating attachment and detachment or movement of members such as the jig mandrel.
FIG. 9(a) to FIG. 9(c) are explanatory diagrams illustrating attachment and detachment or movement of members such as the jig mandrel.
FIG. 10(a) to FIG. 10(c) are explanatory diagrams illustrating attachment and detachment or movement of members such as the jig mandrel.
FIG. 11(a) to FIG. 11(c) are explanatory diagrams illustrating attachment and detachment or movement of members such as the jig mandrel.
FIG. 12(a) to FIG. 12(c) are explanatory diagrams showing yarn placement onto the jig mandrel.
FIG. 13 is a flow chart showing a process of winding fiber bundles onto mandrels.
FIGs. 14 (a) and 14(b) are explanatory diagrams showing a change in the winding angle of the fiber bundle.
FIG. 15 (a) is an explanatory diagram showing a change in angle about the center the mandrel axis of the mandrel, and FIG. 15(b) is a graph illustrating the change in angle.

### [Description of Embodiments]

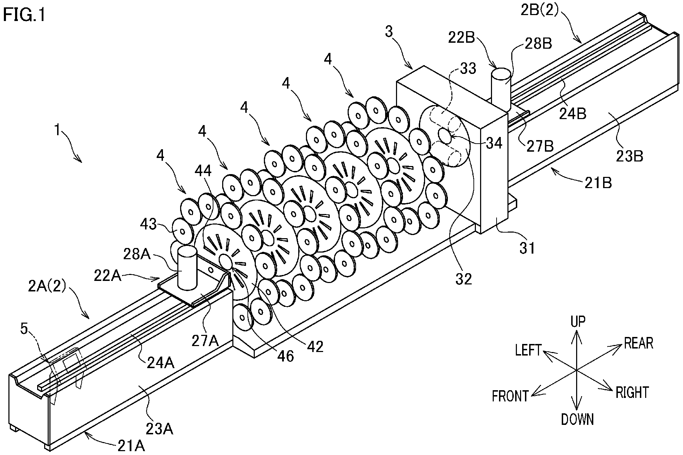

The following will describe an embodiment of the present invention. For convenience of explanation, the directions shown in FIG. 1 will be consistently used as a front-rear direction, a left-right direction, and an up-down direction. The front-rear direction and the left-right direction are in parallel to the horizontal direction. The front-rear direction and the left-right direction are orthogonal to each other. The up-down direction is a direction orthogonal to the horizontal direction and is the direction in which gravity acts (i.e., the vertical direction). The front-rear direction is also called a feeding direction (later described) . The front side may be referred to as the upstream side in the feeding direction. The rear side may be referred to as the downstream side in the feeding direction.

### (Filament Winding Apparatus)

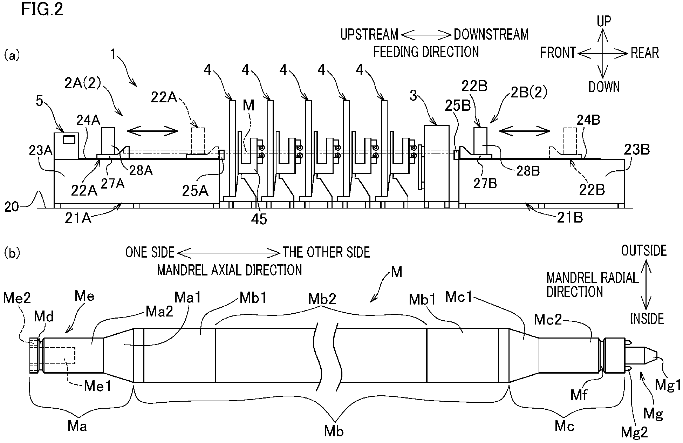

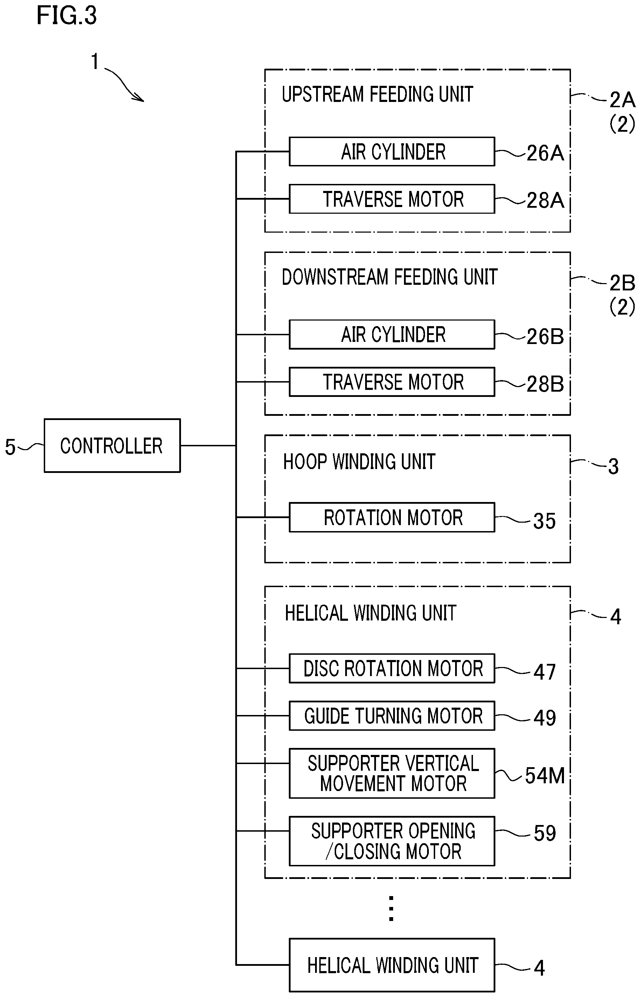

The following will describe a schematic structure of a filament winding apparatus 1 of the present embodiment, with reference to FIG. 1 to FIG. 3. FIG. 1 is a perspective view of the filament winding apparatus 1. FIG. 2(a) is a side view of the filament winding apparatus 1. FIG. 2(b) is a side view of a core material (mandrel M) to which plural fiber bundles are wound. FIG. 3 is a block diagram of an electric configuration of the filament winding apparatus 1.

The filament winding apparatus 1 is arranged to wind plural fiber bundles onto mandrels M (product mandrels of the present invention; see FIGs. 2(a) and 2(b)), respectively. The fiber bundles are not illustrated in FIG. 1 to FIG. 3. "To wind a fiber bundle onto a mandrel M" indicates both to wind a fiber bundle onto the outer circumferential surface of a mandrel M and to further wind a fiber bundle onto a fiber bundle having already been wound onto the outer circumferential surface of a mandrel M. Each of the fiber bundles is formed by, for example, impregnating a fiber material such as carbon fiber with a thermosetting or thermoplastic synthetic resin material. The mandrel M is a core material that extends long in a predetermined mandrel axial direction and is, for example, cylindrical or rod-like in shape. The mandrel M is formed by, for example, a high-strength material such as metal. After fiber bundles are wound onto the mandrel M, a thermosetting step such as baking or a cooling step is performed, with the result that the resin with which the fiber bundles are impregnated is hardened. As the mandrel M is pulled out from a fiber bundle-containing body containing the fiber bundles and the hardened resin, the production of a fiber bundle-containing product is completed. Alternatively, a product that is a combination of a fiber bundle-containing body and a mandrel M may be treated as a completed fiber bundle-containing product.

As shown in FIG. 1 to FIG. 3, the filament winding apparatus 1 includes a pair of feeding units 2 (feeding units of the present invention), a hoop winding unit 3, plural (five in the present embodiment) helical winding units 4, and a controller 5. The filament winding apparatus 1 is configured, as described below, to move the mandrels M connected to be aligned in the front-rear direction from the front side to the rear side (from the upstream side to the downstream side in the feeding direction), by the paired feeding units 2. Furthermore, the filament winding apparatus 1 is configured to wind the fiber bundles supplied from the hoop winding unit 3 and the helical winding units 4 onto each of the mandrel's M which are being moved by the paired feeding units 2.

Before describing each constituent feature of the filament winding apparatus 1 in a specific manner, a specific structure of the mandrel M will be described with reference to FIG. 2(b). The mandrel M extends long in the predetermined mandrel axial direction (left-right direction on the sheet of FIG. 2(b)). The following explanation assumes that the mandrel M is roughly cylindrical or columnar in shape. In other words, the explanation assumes that a cross section of the mandrel M cut along a direction orthogonal to the mandrel axial direction is substantially circular. The center of this cross section is termed a mandrel axial center. The radial direction of the mandrel M is termed a mandrel radial direction. The left side of the sheet in FIG. 2(b) is defined as one side in the mandrel axial direction. The right side of the sheet in FIG. 2(b) is defined as the other side in the mandrel axial direction. The mandrel M has, for example, a small diameter portion Ma, a large diameter portion Mb, and a small diameter portion Mc. In the mandrel axial direction, the small diameter portion Ma, the large diameter portion Mb, and the small diameter portion Mc are aligned in this order. The shape of the mandrel M is not limited to cylindrical or columnar. For example, a cross section of the mandrel M cut along a direction orthogonal to the mandrel axial direction may be polygonal. In this case, the center of gravity of the cross section may be referred to as a mandrel axial center. Alternatively, any other arbitrary point in the cross section may be referred to as a mandrel axial center.

The small diameter portion Ma is a portion formed at one-side end portion of the mandrel M in the mandrel axial direction. The small diameter portion Ma is, for example, substantially cylindrical or columnar in shape. The small diameter portion Ma has, for example, an inclined portion Ma1 having a substantially circular frustum shape and a columnar portion Ma2 having a substantially columnar shape. The inclined portion Ma1 is a part adjacent to the large diameter portion Mb in the mandrel axial direction. The diameter of the inclined portion Ma1 decreases the farther it is from the large diameter portion Mb in the mandrel axial direction. The columnar portion Ma2 opposes the large diameter portion Mb over the inclined portion Ma1 in the mandrel axial direction. The columnar portion Ma2 has, for example, a chucking portion Md and a connecting portion Me. The chucking portion Md is a portion that is recessed inward in the mandrel radial direction in the columnar portion Ma2. The chucking portion Md is configured to be held by a later-described chuck mechanism 25A. The connecting portion Me is arranged to be connectable to the small diameter portion Mc of another mandrel M. The connecting portion Me has, for example, a concave portion Me1 which is configured to allow insertion of a later-described protruding portion Mg1 therein and plural positioning holes Me2 which are configured to allow insertion of later-described plural positioning pins Mg2 therein.

The large diameter portion Mb is positioned on the other side of the small diameter portion Ma and on one side of the small diameter portion Mc in the mandrel axial direction. In other words, the large diameter portion Mb is provided between the small diameter portion Ma and the small diameter portion Mc in the mandrel axial direction. The large diameter portion Mb is, for example, substantially cylindrical or columnar in shape. The shape of the large diameter portion Mb is not limited to this. The outer diameter of the large diameter portion Mb is larger than the outer diameter of the columnar portion Ma2 and the outer diameter of the columnar portion Mc2. The large diameter portion Mb extends over the most part of the mandrel M in the mandrel axial direction. The large diameter portion Mb has, for example, a pair of end portions Mb1 and a central portion Mb2. The paired end portions Mb1 are provided at both ends in the mandrel axial direction of the large diameter portion Mb. The central portion Mb2 is positioned between the paired end portions Mb1 in the mandrel axial direction. The central portion Mb2 occupies the most part of the large diameter portion Mb in the mandrel axial direction. A fiber bundle-containing body which includes a fiber bundle wound around the large diameter portion Mb among the fiber bundles wound around the central portion Mb2 is treated as a product (fiber bundle-containing product).

The small diameter portion Mc is a portion formed at the other-side end portion of the mandrel M in the mandrel axial direction. The small diameter portion Mc is, for example, substantially cylindrical or columnar in shape. The small diameter portion Mc has, for example, an inclined portion Mc1 having a substantially circular frustum shape and a columnar portion Mc2 having a substantially columnar shape. The inclined portion Mc1 is a part adjacent to the large diameter portion Mb in the mandrel axial direction. The diameter of the inclined portion Mc1 decreases the farther it is from the large diameter portion Mb in the mandrel axial direction. The columnar portion Mc2 opposes the large diameter portion Mb over the inclined portion Mc1 in the mandrel axial direction. The outer diameter of the columnar portion Mc2 is substantially equal to the outer diameter of the columnar portion Ma2. The columnar portion Mc2 has a chucking portion Mf and a connecting portion Mg. The connecting portion Mg is arranged to be connectable to the small diameter portion Ma of another mandrel M. The connecting portion Mg has, for example, a protruding portion Mg1 that protrudes to one side (i.e., opposite side of the large diameter portion Mb) in the mandrel axial direction and a plurality of positioning pins Mg2 that protrude to one side in the mandrel axial direction, too. The protruding portion Mg1 can be inserted into the recess Me1 of another mandrel M. Each of the positioning pins Mg2 can be inserted into any of the positioning holes Me2.

The mandrels M having the above-described structure can be connected to each other and aligned in the mandrel axial direction in a non-rotatable manner (i.e., in a mutually non-rotatable manner). To put it differently, the two mandrels M are connected to each other in a mutually non-rotatable manner, through the connecting portion Me of one mandrel M and the connecting portion Mg of the other mandrel M. In this way, two or more mandrels M can be connected to each other in the mandrel axial direction so as to extend long in the mandrel axial direction.

Taking into consideration the structure of the mandrels M described above, the structure of the paired feeding units 2 will be explained. The paired feeding units 2 are configured so that one or more mandrel M is attached thereto in a non-rotatable manner. The paired feeding units 2 are configured to be able to move the one or more mandrels M from the front side (upstream side in the feeding direction) to the rear side (downstream side in the feeding direction). The feeding direction is substantially parallel to the mandrel axial direction of the one or more mandrels M that is being moved by the paired feeding units 2.

As shown in FIG. 1 to FIG. 3, the paired feeding units 2 include an upstream feeding unit 2A and a downstream feeding unit 2B. The upstream feeding unit 2A is located at the frontmost side of the filament winding apparatus 1. The downstream feeding unit 2B is located at the rearmost side of the filament winding apparatus 1. In other words, the paired feeding units 2 are disposed to sandwich the hoop winding unit 3 and the helical winding units 4 in the front-rear direction (i.e., in the feeding direction).

As shown in FIG. 1 and FIG. 2(a), the upstream feeding unit 2A includes a base portion 21A and a moving unit 22A. The base portion 21A is immovably installed on a floor surface 20 of a building (not illustrated). The base unit 21A has a frame 23A, a rail 24A, and a chuck mechanism 25A. The frame 23A extends long in the front-rear direction. The rail 24A is configured to guide the moving unit 22A in the front-rear direction. The rail 24A is disposed on the upper surface of the frame 23A and extends long in the front-rear direction. The chuck mechanism 25A is provided at a rear end portion of the frame 23A. The chuck mechanism 25A is, for example, configured to hold the chucking portion Md of one of the mandrels M, thereby preventing that mandrel M from moving in the mandrel axial direction and from rotating. The chuck mechanism 25A includes, for example, an air cylinder 26A (see FIG. 3) that is driven by the supply and discharge of compressed air and an upstream holding member (not illustrated) that is driven by the air cylinder 26A. The supply and discharge of compressed air to and from the air cylinder 26A are controlled by, for example, the controller 5 which opens and closes a solenoid valve (not illustrated) arranged in a passage of the compressed air. The upstream holding member is configured to be movable, by the air cylinder 26A, between a holding position where the chucking portion Md is held and a cancellation position where the holding of the chucking portion Md is canceled. The upstream holding member may be driven by, for example, a motor (not illustrated) instead of the air cylinder 26A.

The moving unit 22A is configured to be movable in the front-rear direction relative to the base unit 21A. The moving unit 22A includes a main body 27A and a traverse motor 28A. The main body 27A is configured to be connected to one of the mandrels M through a connecting portion Me, and to support that mandrel M in a non-rotatable manner. The main body 27A is configured to be guided in the front-rear direction by the rail 24A. The main body 27A is driven to move in the front-rear direction by the traverse motor 28A. The traverse motor 28A is electrically connected to the controller 5 and is controlled by the controller 5. The traverse motor 28A is configured to be able to move the main body 27A both forward and rearward.

As shown in FIG. 1 and FIG. 2(a), the downstream feeding unit 2B includes a base portion 21B and a moving unit 22B. The downstream feeding unit 2B is arranged to be substantially plane-symmetrical with the upstream feeding unit 2A with respect to a predetermined virtual plane (not illustrated) that is orthogonal to the front-rear direction. That is to say, the base unit 21B has a frame 23B, a rail 24B, and a chuck mechanism 25B. The rail 24B extends long in the front-rear direction. The chuck mechanism 25B is provided at a front end portion of the frame 23B. The chuck mechanism 25B is, for example, configured to hold the chucking portion Mf of one of the mandrels M, thereby preventing that mandrel M from moving in the mandrel axial direction and from rotating. The chuck mechanism 25B includes, for example, an air cylinder 26B (see FIG. 3) and a downstream holding member (not illustrated) that is driven by the air cylinder 26B. The supply and discharge of compressed air to and from the air cylinder 26B are controlled by the controller 5, in the same manner as the supply and discharge of compressed air to and from the air cylinder 26A. The downstream holding member is configured to be movable, by the air cylinder 26B, between a holding position where the chucking portion Mf is held and a cancellation position where the holding of the chucking portion Mf is canceled. The downstream holding member may be driven by, for example, a motor (not illustrated) instead of the air cylinder 26B. The moving unit 22B includes a main body 27B and a traverse motor 28B. The main body 27B is configured to be connected to one of the mandrels M through a connecting portion Mg, and to support that mandrel M in a non-rotatable manner. The main body 27B is configured to be guided in the front-rear direction by the rail 24B. The main body 27B is driven to move in the front-rear direction by the traverse motor 28B. The traverse motor 28B is electrically connected to the controller 5 and is controlled by the controller 5. The traverse motor 28B is configured to be able to move the main body 27B both forward and rearward.

The hoop winding unit 3 is configured to perform hoop-winding onto the mandrel M. The hoop-winding is a way of winding the fiber bundles in a direction substantially orthogonal to the mandrel axial direction. As shown in FIG. 1, the hoop winding unit 3 is, for example, positioned immediately upstream of the downstream feeding unit 2B in the mandrel axial direction. The hoop winding unit 3 includes a main body 31, a rotating member 32, and supplying bobbins 33. The main body 31 is positionally fixed relative to the floor surface 20. The main body 31 is configured to support the rotation member 32 to be rotatable about the axial center of the mandrel M. The rotation member 32 is, for example, a substantially disc-shaped member. At a central portion of the rotating member 32, a substantially circular-shaped passing hole 34 through which the mandrel M can pass is formed. The rotating member 32 rotatably supports plural supplying bobbins 33 which are provided outside the passing hole in the mandrel radial direction. On each supplying bobbin 33, a fiber bundle (not illustrated) is wound.

The hoop winding unit 3 has a rotation motor 35 (see FIG. 3) configured to be able to rotationally drive the rotation member 32. The rotation motor 35 is electrically connected to the controller 5 and is controlled by the controller 5. When the hoop-winding is executed, the controller 5 controls the rotation motor 35 to rotate the rotation member 32, while controlling the feeding units 2 to move the mandrel M to the downstream side in the feeding direction. Because of this, the fiber bundles are pulled out from the supplying bobbins 33 rotating around the mandrel M, and the fiber bundles are hoop-wound onto the circumferential surface of the mandrel M.

Each of the helical winding units 4 is configured to perform helical-winding onto the mandrel M. As compared to the hoop-winding, the helical-winding is a way of winding fiber bundles in a direction having a component of the mandrel axial direction. In the present embodiment, a winding method in which an angle between a fiber bundle and the mandrel axial direction is 45 degrees or less is called helical-winding. The helical winding units 4 are, for example, provided between the upstream feeding unit 2A and the hoop winding unit 3 in the feeding direction. The helical winding units 4 are aligned in the front-rear direction.

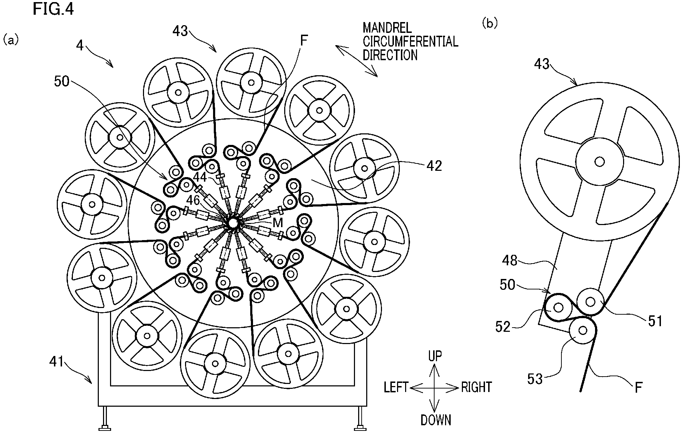

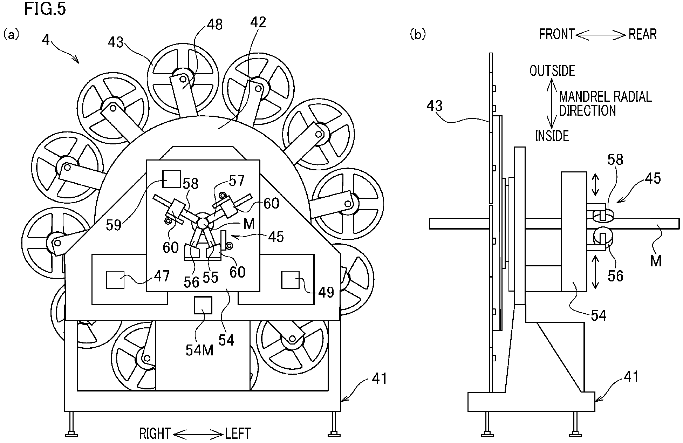

The following will describe a more specific structure of each helical winding unit 4 with reference to FIGs. 4(a) to 5(b). FIG. 4(a) is a front view of the helical winding unit 4. FIG. 4(b) is an enlarged view of one supplying bobbin and its surroundings. FIG. 5(a) is a rear view of the helical winding unit 4. FIG. 5(b) is a side view of the helical winding unit 4.

As shown in FIG. 4(a), FIG. 5(a), and FIG. 5(b), each helical winding unit 4 includes a base portion 41, a disc member 42, a plurality of supplying bobbins 43, a plurality of fiber bundle guides 44, and a mandrel supporter 45. The base portion 41 is positionally fixed relative to the floor surface 20 (see FIG. 2(a)). The base portion 41 is configured to support the disc member 42 to be rotatable about the axial center of the mandrel M. The disc member 42 is a substantially disc-shaped member that is configured to be rotatable relative to the base portion 41. The rotational axis direction of the disc member 42 is substantially in parallel to the front-rear direction (i.e., substantially in parallel to the mandrel axial direction). In a mandrel radial direction, a substantially circular passing hole 46 (see FIGs. 1 and 4(a)) through which the mandrel M can pass is formed at a central portion of the disc member 42. The disc member 42 is configured to support the supplying bobbins 43 and the fiber bundle guides 44 that are provided outside the passing hole 46 in the mandrel radial direction. The disc member 42 is rotationally driven about the axial center of the mandrel M by a disc rotation motor 47 (see FIGs. 3 and 5(b)) and an unillustrated power transmission mechanism. The disc rotation motor 47 is provided for each helical winding unit 4. The disc rotation motor 47 is electrically connected to the controller 5 (see FIG. 3) and is controlled by the controller 5.

The supplying bobbins 43 are aligned in the circumferential direction of the mandrel M (hereinafter, this direction will be referred to as a mandrel circumferential direction). On each supplying bobbin 43, a fiber bundle F (see FIGs. 4(a) and 4(b)) is wound. Each of the plural supplying bobbins 43 is supported, for example, by a plate-shaped support member 48 to be rotatable (rotatable on its axis) (see FIG. 4(b) and FIG. 5(b)). The support member 48 is fixed to the disc member 42. In other words, the supplying bobbins 43 are supported by the disc member 42 through the support members 48. In place of the disc member 42 and the support members 48, one support member (not illustrated) that supports the supplying bobbins 43 to be rotatable may be provided.

The fiber bundle guides 44 are provided for the respective supplying bobbins 43. Each of the fiber bundle guides 44 is attached to the disc member 42. The fiber bundle guides 44 are provided inside the supplying bobbins 43 in the mandrel radial direction. The fiber bundle guides 44 are aligned in the mandrel circumferential direction. Each of the plural fiber bundle guides 44 is arranged to extend in a predetermined direction that is in parallel to the mandrel radial direction. Each of the fiber bundle guides 44 is arranged to guide a fiber bundle F unwound from the supplying bobbin 43 toward the inside in the mandrel radial direction. Each of the plural fiber bundle guides 44 is, for example, configured to be rotationally driven about a rotational axial direction that is the direction in which each fiber bundle guide 44 extends, by a guide turning motor 49 (see FIG. 3 and FIG. 5(b)) that is a common driving source between the fiber bundle guides 44. The guide turning motor 49 is provided for each helical winding unit 4. The guide turning motor 49 is electrically connected to the controller 5 (see FIG. 3), and is controlled by the controller 5.

Furthermore, as shown in FIG. 4(a), in the mandrel radial direction, tension applying units 50 are provided between the supplying bobbins 43 and the fiber bundle guides 44. The tension applying units 50 are configured to apply tension to each of the fiber bundles F (see FIG. 4(a) and FIG. 4(b)). The tension applying units 50 are provided for the respective supplying bobbins 43 and the respective fiber bundle guides 44. Each of the tension applying units 50 includes, for example, a first guide roller 51, a slack removing roller 52, and a second guide roller 53 (see FIG. 4(b)). The fiber bundle F pulled out from each supplying bobbin 43 is wound onto the first guide roller 51, the slack removing roller 52, and the second guide roller 53 in this order, which are provided in the corresponding tension applying unit 50. Furthermore, the fiber bundle F is guided inward in the mandrel radial direction by the corresponding fiber bundle guide 44.

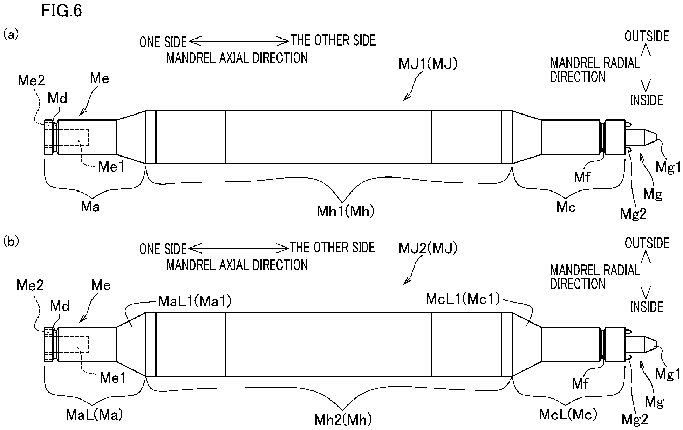

The mandrel supporter 45 is arranged to support the mandrel M which is being moved by the paired feeding units 2. The mandrel supporter 45 is arranged on the rear side of the disc member 42, for example (see FIG. 2(a) and FIG. 5(b)). As shown in FIG. 5(b), the mandrel supporter 45 includes, for example, a supporting member 54 and supporting rollers 55 to 58. The supporting member 54 is, for example, attached to the base portion 41 to be movable up and down. The supporting member 54 is moved in the up-down direction by a supporter vertical movement motor 54M (see FIG. 3 and FIG. 6(a)) and a power transmission mechanism (not illustrated). The supporting rollers 55 to 58 are supported by the supporting member 54 to be rotatable and movable in the mandrel radial direction. The supporting rollers 55 and 56 are positioned below the passage of the mandrel M. The supporting rollers 55 and 56 are arranged to be adjacent to each other in the left-right direction. The supporting roller 57 is positioned above and to the left of the passage of the mandrel M, for example. The supporting roller 58 is positioned above and to the right of the passage of the mandrel M, for example. The rollers 55 to 58 are driven to move (i.e., are opened or closed) simultaneously in the mandrel radial direction by a supporter opening/closing motor 59 (see FIGs. 3 and 5(a)) and a power transmission mechanism (e.g., plural known rack-and-pinion mechanisms 60). This allows the supporting rollers 55 to 58 to be appropriately positioned in the mandrel radial direction, in response to increase in thickness of the mandrel M on account of the stacking of fiber bundles F thereon. The supporter opening/closing motor 59 is provided for each helical winding unit 4. The supporter opening/closing motor 59 is electrically connected to the controller 5 (see FIG. 3), and is controlled by the controller 5.

As the supporter vertical movement motor 54M moves the supporting member 54 in the up-down direction, the supporting rollers 55 to 58 are moved altogether in the up-down direction. This can reduce or prevent the occurrence of the following problem. That is to say, because the fiber bundles F wound on the mandrel M are soft, there is a risk that the fiber bundles F sandwiched between the mandrel M and the supporting rollers 55 and 56 may deform (flatten) due to the gravity acting on the mandrel M and the reaction applied from the supporting rollers 55 and 56. This may cause the mandrel M to bend on its own weight. Even if the above-described deformation of the fiber bundles F occurs, the fiber bundles F and the mandrel M are supported at a suitable height by the supporting rollers 55 and 56, as the supporting rollers 55 to 58 are moved slightly upward by the supporter vertical movement motor 54M. This makes it possible to reduce or prevent the bending of the mandrel M.

When the helical-winding is executed, the controller 5 controls the disc rotation motor 47 to rotate the disc member 42, while controlling the paired feeding units 2 to move the mandrel M to the downstream side in the feeding direction. Because of this, the fiber bundles F are pulled out from the respective supplying bobbins 43 rotating around the mandrel M, and the fiber bundles F are helical-wound onto the mandrel M. Furthermore, the controller 5 control the guide turning motor 49 according to need (i.e., in accordance with the winding angle of each of the fiber bundles F onto the mandrel M), so as to turn the fiber bundle guides 44.

The controller 5 is, e.g., a typical computer device. The controller 5 includes an input unit (not illustrated) configured to receive a predetermined input, an output unit (not illustrated) configured to perform predetermined output, and a storage unit (not illustrated) configured to store various sets of information. The controller 5 is electrically connected to each constituent feature of the filament winding apparatus 1. The controller 5 is configured to control each constituent feature of the filament winding apparatus 1 based on a predetermined program.

When winding a fiber bundle F onto the mandrel F, it is necessary to fix the leading end portion of the fiber bundle F to somewhere on the mandrel M. When, in order to fix a leading end portion of a fiber bundle to a mandrel, the fiber bundle is wound onto around the leading end portion of the fiber bundle while the leading end portion is provided in the vicinity of the circumferential surface of the mandrel, problems such as irregular thickness of the fiber bundle layer and misalignment of the fiber bundles wound on the mandrel may occur. As a result, the quality of the product formed by the fiber bundles deteriorates. Furthermore, even when the leading end portion of the fiber bundle is fixed to the circumferential surface of the mandrel by using a means different from the fiber bundle, the quality of the product may deteriorate due to contamination of the product with a foreign matter different from the fiber bundle.

Therefore, in order to avoid contamination of the product with a foreign matter, the filament winding apparatus 1 is configured as follows. In addition, in the filament winding apparatus 1, a fiber bundle-containing product containing plural fiber bundles F is manufactured by the method described below.

### (Jig Mandrel)

The filament winding machine 1 has plural jig mandrels MJ as shown in FIGs. 6(a) and (b). FIG. 6(a) is a side view of a first jig mandrel MJ1 which is one of the jig mandrels MJ. FIG. 6(b) is a side view of a second jig mandrel MJ2 which is different from the first jig mandrel MJ1. For the sake of simplicity in explanation, the axial direction of the jig mandrel MJ is also referred to as a mandrel axial direction in the same manner as the mandrel axial direction M.

The jig mandrels MJ are jigs used to fix, for example, the leading end portion of a fiber bundle F (details will be given later). Each of the plural jig mandrels MJ is a core member shorter in the mandrel axial direction than the mandrel M. The jig mandrel MJ has, for example, the above-described small diameter portions Ma and Mc and a large diameter portion Mh that is shorter in the mandrel axial direction than the large diameter portion Mb.

The large diameter portion Mh is a part to which the leading end portion of the fiber bundle F, etc. is fixed. The large diameter portion Mh is, for example, substantially cylindrical or columnar in shape. The shape of the large diameter portion Mh is not limited to this. The outer diameter of the large diameter portion Mh (large diameter portion Mh1) of the first jig mandrel MJ1 is substantially equal to the outer diameter of the mandrel M, for example. The outer diameter of the large diameter portion Mh (large diameter portion Mh2) of the second jig mandrel MJ2 is larger than the outer diameter of the first jig mandrel MJ1. In other words, the second jig mandrel MJ2 is thicker than the first jig mandrel MJ1. In the small diameter portion Ma (small diameter portion MaL) of the second jig mandrel MJ2, the outer diameter of an end on the large diameter portion Mh2 side of the inclined portion MaL1 in the mandrel axial direction is substantially identical with the outer diameter of the large diameter portion Mh2, for example. In the small diameter portion Mc (small diameter portion McL) of the second jig mandrel MJ2, the outer diameter of an end on the large diameter portion Mh2 side of the inclined portion McL1 in the mandrel axial direction is substantially identical with the outer diameter of the large diameter portion Mh2, for example.

### (Details of Structure of Small Diameter Portion)

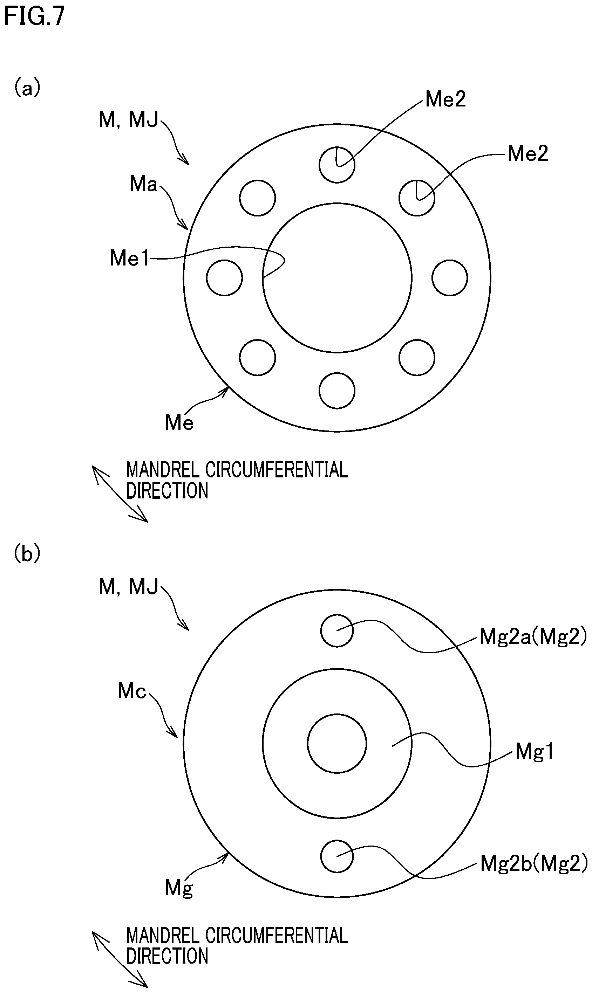

The following will explain in detail the structure of the small diameter portions Ma and Mc formed in each the mandrel M and the jig mandrel MJ, with reference to FIGs. 7(a) and 7(b). FIG. 7(a) shows the connecting portion Me formed in the small diameter portion Ma, which is viewed from one side of the small diameter portion Ma in the mandrel axial direction. FIG. 7(b) shows the connecting portion Mg formed in the small diameter portion Mc, which is viewed from the other side of the small diameter portion Mc in the mandrel axial direction.

As shown in FIG. 7(a), the connecting portion Me has eight positioning holes Me2, for example. The eight positioning holes Me2 are, for example, aligned in the mandrel circumferential direction at substantially equal angular intervals. In other words, the eight positioning holes Me2 are deviated from one another by 45 degrees in angular position, with the above-described mandrel axial center being the center point. The number and angular intervals of the above-described positioning holes Me2 are purely for explanatory convenience. In other words, the number and angular intervals of the positioning holes Me2 are not limited to those described above. Furthermore, the angular interval between two adjacent positioning holes Me2 is not necessarily constant.

As shown in FIG. 7(b), the connecting portion Mg has two positioning pins Mg2, for example. For the sake of convenience, one of the two positioning pins Mg2 is termed a positioning pin Mg2a, whereas the other of these pins is termed a positioning pin Mg2b. The positioning pins Mg2a and Mg2b are arranged to oppose each other over the protruding portion Mg1, when viewed in the mandrel axial direction. In other words, the positioning pin Mg2b is positioned at a location that is 180 degrees of rotation from the above-described positioning pin Mg2a about the mandrel axial center.

Furthermore, although not shown, the moving unit 22B of the downstream feeding unit 2B has plural positioning holes to which two positioning pins Mg2 can be inserted. These positioning holes may be deviated from one another by 45 degrees in angular position in the same manner as the eight positioning holes Me2. The moving unit 22A of the upstream feeding unit 2A has plural positioning pins that can be inserted into the eight positioning holes Me2. The number of these positioning pins may be two in the same manner as the positioning pins Mg2 of each connecting portion Mg, for example. With the above-described arrangement, the angles of the mandrels M and the jig mandrels MJ about the mandrel axial centers are changeable in units of 45 degrees with respect to the paired feeding units 2, when viewed in the front-rear direction.

### (Steps of Movement of Mandrels)

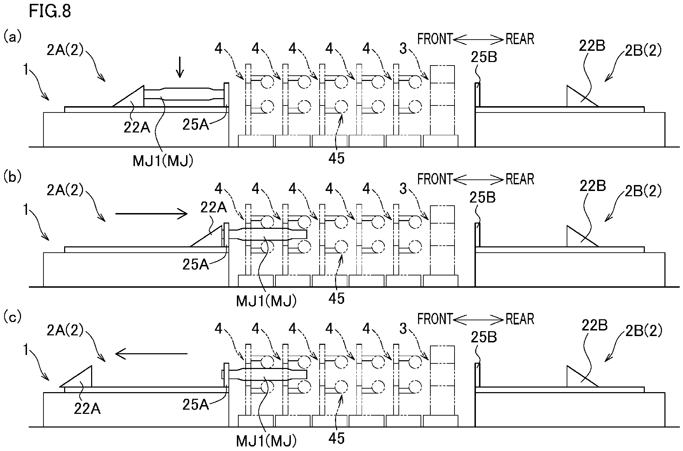

The following will describe the steps of a process of moving the jig mandrel MJ and the mandrels M, which is a basic operation of the paired feeding units 2, with reference to FIG. 8(a) to FIG. 11(c). As an example, the following will describe the steps of feeding the first jig mandrel MJ1 and three mandrels M (mandrels M1, M2, and M3) from the upstream side to the downstream side in the feeding direction. In the present embodiment, a group consisting of the mandrels M1, M2, and M3 is referred to as a mandrel group for convenience of explanation. Plural fiber bundles supplied from the hoop winding unit 3 or the helical winding unit 4 are fixed onto the outer circumference of the jig mandrel MJ as needed (yarn placement). The yarn placement will be detailed later.

In an initial state, the jig mandrel MJ and the mandrels M are not mounted on the paired feeding units 2. The moving unit 22A of the upstream feeding unit 2A and the moving unit 22B of the downstream feeding unit 2B are provided at suitable positions in the front-rear direction.

To begin with, for example, an operator causes the chuck mechanism 25A to hold a rear end portion of the first jig mandrel MJ1 that is the narrowest one of the jig mandrels MJ, and attaches a front end portion of the first jig mandrel MJ1 to the moving unit 22A (see FIG. 8(a)). As a result, the rear end portion of the first jig mandrel MJ1 is held not to be rotatable by the chuck mechanism 25A, while the front end portion is supported not to be rotatable by the moving unit 22A. At this time, the first jig mandrel MJ1 is located at the upstream end in the feeding direction. The mandrel axial direction of the first jig mandrel MJ1 attached to the moving unit 22A is substantially in parallel to the front-rear direction.

Subsequently, when the operator performs a predetermined input operation for the controller 5, the controller 5 controls the air cylinder 26A to cancel the holding of the first jig mandrel MJ1 by the chuck mechanism 25A. Subsequently, the controller 5 controls the traverse motor 28A to move the moving unit 22A rearward. This causes the first jig mandrel MJ1 to move rearward (i.e., to the downstream side in the feeding direction). The moving distance in the front-rear direction of the moving unit 22A and the mandrel M1 at this time is substantially the same as the length in the mandrel axial direction of the first jig mandrel MJ1 (see FIG. 8(b)), for example. A part in the mandrel axial direction of the first jig mandrel MJ1 having been fed rearward is supported by one or more mandrel supporter 45. While the first jig mandrel MJ1 is being fed rearward, the controller 5 may temporarily stop the operation of the paired feeding units 2. When the operation of the paired feeding units 2 is stopped, the operator is allowed to perform tasks such as yarn placement (described later) on the first jig mandrel MJ1. When the operation of the paired feeding units 2 is stopped, the operator performs a predetermined input operation to the controller 5, with the result that the controller 5 resumes the operation of the paired feeding units 2. For the sake of simplicity, the explanation regarding this input operation will be omitted.

Subsequently, the controller 5 controls the air cylinder 26A to cause the chuck mechanism 25A to hold the first jig mandrel MJ1. By doing this, the first jig mandrel MJ1 is held not to be rotatable by the chuck mechanism 25A. Subsequently, the controller 5 controls the traverse motor 28A to move the moving unit 22A forward (see FIG. 8(c)). This causes the moving unit 22A to be separated from the first jig mandrel MJ1.

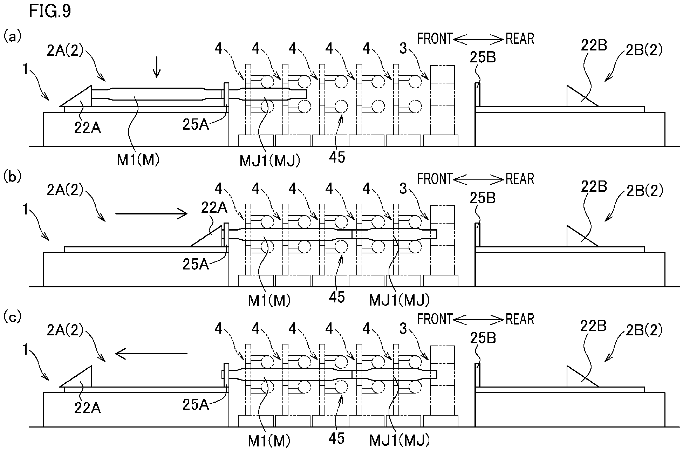

Subsequently, the operator connects the rear end portion of the mandrel M1, which is the first mandrel M for the product, to the first jig mandrel MJ1 so that relative rotation is impossible, and attaches the front end portion of the mandrel M1 to the moving unit 22A in a non-rotatable manner (see FIG. 9(a)). The mandrel axial direction of the mandrel M1 is substantially parallel to the front-rear direction. Subsequently, the controller 5 controls the air cylinder 26A to cancel the holding of the first jig mandrel MJ1 by the chuck mechanism 25A. Subsequently, the controller 5 controls the traverse motor 28A to move the moving unit 22A rearward (see FIG. 9(b)). This causes the first jig mandrel MJ1 and the mandrel M1 to be fed to the downstream side in the feeding direction. Subsequently, the controller 5 causes the chuck mechanism 25A to hold the mandrel M1 and moves the moving unit 22A forward (see FIG. 9(c)). This causes the moving unit 22A to be separated from the mandrel M1**.**

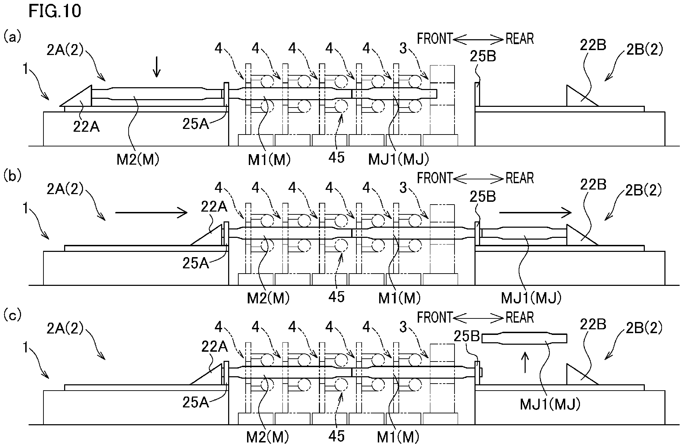

Subsequently, the operator connects the rear end portion of the mandrel M2, which is the second mandrel M for the product, to the mandrel M1 so that relative rotation is impossible, and attaches the front end portion of the mandrel M2 to the moving unit 22A in a non-rotatable manner (see FIG. 10(a)). Subsequently, the controller 5 controls the air cylinder 26A to cancel the holding of the mandrel M1 by the chuck mechanism 25A. Subsequently, the controller 5 controls the traverse motor 28A to move the moving unit 22A rearward (see FIG. 10(b)). This causes the first jig mandrel MJ1 and the mandrels M1 and M2 to be fed to the downstream side in the feeding direction. As a result, the rear end portion of the first jig mandrel MJ1 is attached in a non-rotatable manner to the moving unit 22B provided at a suitable position in the front-rear direction. Alternatively, after the completion of the rearward movement of the first jig mandrel MJ1, the controller 5 may move the moving unit 22B to the above-described suitable position.

Subsequently, the controller 5 controls the air cylinder 26B to cause the chuck mechanism 25B to hold the mandrel M1. As a result, the mandrel M1 is held by the chuck mechanism 25B in a non-rotatable manner. In this state, the operator detaches the first jig mandrel MJ1 from the moving unit 22B and the mandrel M1 (see FIG. 10(c)).

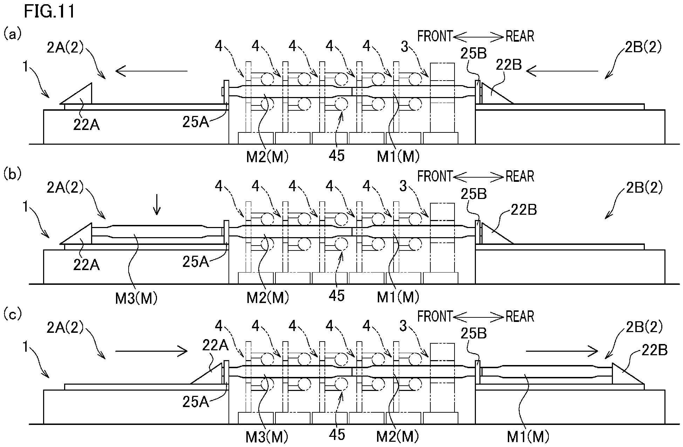

Subsequently, the controller 5 causes the chuck mechanism 25A to hold the mandrel M2 and moves the moving units 22A and 22B forward (see FIG. 11(a)). This causes the moving unit 22A to be separated from the mandrel M2. Furthermore, the mandrel M1 is attached to the moving unit 22B in a non-rotatable manner. Subsequently, the operator connects the rear end portion of the mandrel M3, which is the third mandrel M for the product, to the mandrel M2 so that relative rotation is impossible, and attaches the front end portion of the mandrel M3 to the moving unit 22A in a non-rotatable manner (see FIG. 11(b)). Subsequently, the controller 5 cancels the holding of the mandrel M1 by the chuck mechanism 25A and moves the moving unit 22A rearward (see FIG. 11(c)). This causes the mandrels M1 to M3 to be fed to the downstream side in the feeding direction. The mandrel M1 reaches the downstream end in the feeding direction.

Although further illustrations are omitted, the mandrels M1 to M3 can be serially fed to the downstream side in the feeding direction in this way. A step of serially aligning the mandrels M1 to M3 in the mandrel axial direction and connecting them so as not to be relatively rotatable on the upstream side in the feeding direction of the jig mandrel MJ is equivalent to a connecting step of the present invention. Furthermore, hereinafter, for the sake of explanation, a step of feeding all of the mandrels M1 to M3 (i.e., a single mandrel group) once from the upstream end to the downstream end in the feeding direction will be referred to as a unit feeding step.

In the state shown in FIG. 11(c), as the controller 5 causes the chuck mechanism 25B to hold the mandrel M2, it becomes possible to detach the mandrel M1 from the moving unit 22B and the mandrel M2 (not illustrated). The operator is allowed to return the mandrel M1 forward by carrying the same, for example. The operator may provide the mandrel M1 at the upstream end in the feeding step again, according to need. The operator may provide the mandrel M1 at a position immediately upstream of the mandrel M3 in the feeding step. Alternatively, the operator may provide the jig mandrel MJ between the mandrel M1 and the mandrel M3 as needed. In this way, the above-described unit feeding step can be repeated for a desired number of times. In other words, it is possible to repeatedly transport the mandrels M1 to M3 to the hoop winding unit 3 and the helical winding units 4. This makes it possible to form plural layers of fiber bundles on the mandrels M1, M2, and M3. By adjusting the traveling speed of the moving units 22A and 22B, the speed of the transportation can be adjusted. While the steps of moving the mandrels M1 to M3 have been described above, four or more mandrels M can be serially moved in the feeding direction by performing similar steps.

### (Yarn Placement)

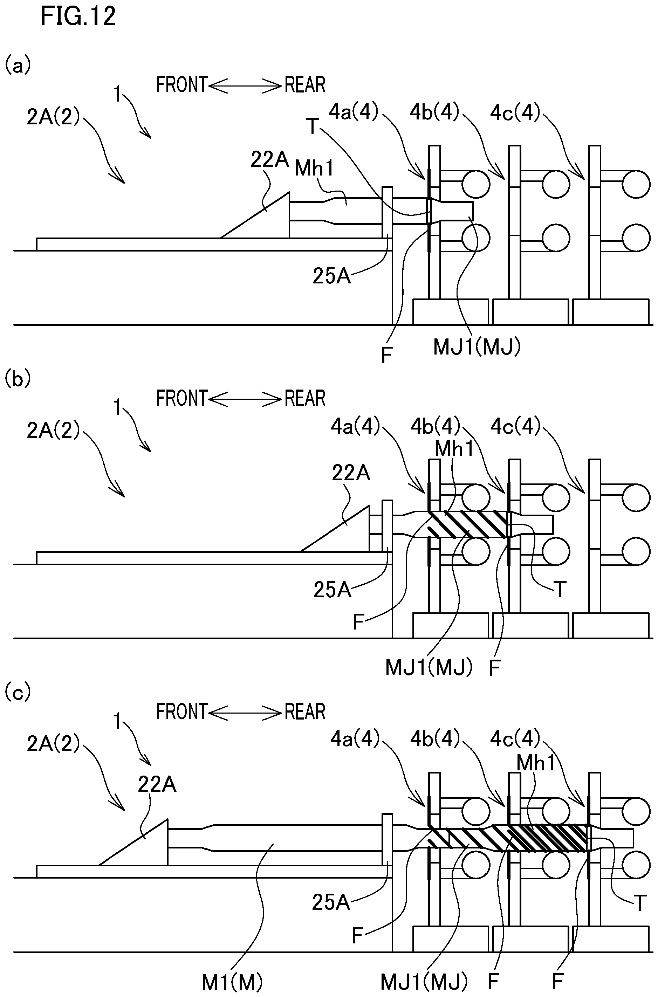

The following will explain yarn placement onto the jig mandrel MJ, which is a basic operation performed by the operator, mainly with reference to FIG. 12(a) to FIG. 12(c). As an example, yarn placement onto the front three helical winding units 4 (helical winding units 4a, 4b, and 4c from the front side to the rear side) will be described.

To begin with, as described above, the operator causes the chuck mechanism 25A to hold the rear end portion of the first jig mandrel MJ1, and attaches the front end portion of the first jig mandrel MJ1 to the moving unit 22A (see FIG. 8(a)). Thereafter, the operator operates the controller 5 to cancel the holding of the first jig mandrel MJ1 by the chuck mechanism 25A and move the first jig mandrel MJ1 rearward. The controller 5, for example, moves the moving unit 22A in the front-rear direction until the rear end portion of the large diameter portion Mh1 of the first jig mandrel MJ1 reaches a position that is substantially identical with those of the fiber bundle guides 44 of the frontmost helical winding unit 4a. Subsequently, the controller 5 stops the moving unit 22A. As a result, the first jig mandrel MJ1 stops at a position where the yarn placement is possible (see FIG. 12(a)). The position where the first jig mandrel MJ1 stops is not limited to this.

In this state, the operator pulls fiber bundles F out from the supplying bobbins 43 of the helical winding unit 4a. The operator then threads each fiber bundle F into the corresponding tension applying unit 50 and the fiber bundle guide 44, and guides the leading end portion of each fiber bundle F toward the inner side in the mandrel radial direction. In other words, the operator positions the leading end portion of each fiber bundle F in the vicinity of the first jig mandrel MJ1. Subsequently, the operator joins the leading end portion of each of the fiber bundles F with the outer circumferential surface of the large diameter portion Mh1 of the first jig mandrel MJ1 by using, for example, a fastener such as a tape T (preferably a curing tape) (see FIG. 12(a)). In this way, the leading end portions are fixed to the first jig mandrel MJ1. To put it differently, the yarn placement onto the first jig mandrel MJ1 in the helical winding unit 4a is completed. Preferably, the operator joins the leading end portions of the fiber bundles F with the outer circumferential surface of the large diameter portion Mh1 at substantially equal angular intervals (angular intervals about the mandrel axial center).

Subsequently, the operator operates the controller 5 to move the first jig mandrel jig MJ1 rearward. The controller 5 moves the moving unit 22A rearward at an appropriate speed, and controls the disc rotation motor 47 of the helical winding unit 4a to rotate the disc member 42 in a predetermined direction at a predetermined rotation speed. In this way, the leading end portion of each of the fiber bundles is pulled by the first jig mandrel MJ1, and hence the fiber bundles F are pulled out from the supplying bobbins 43 of the helical winding unit 4a. The fiber bundles F are then wound onto the outer circumferential surface of the first jig mandrel MJ1 at predetermined winding angles (see FIG. 12(b)). The controller 5 moves the moving unit 22A until the rear end portion of the large diameter portion Mh1 reaches a position substantially identical with those of the fiber bundle guides 44 of the helical winding unit 4a. Subsequently, the operator performs yarn placement onto the first jig mandrel MJ1 of the helical winding unit 4b in the same method as the above-described method (see FIG. 12(b)).

Furthermore, the operator operates the controller 5 to move the first jig mandrel MJ1 rearward, after, for example, the mandrel M1 is attached to the first jig mandrel MJ1 and the moving unit 22A. The controller 5 moves the moving unit 22A rearward at an appropriate speed, and controls the disc rotation motor 47 of each of the helical winding units 4a and 4b to rotate the disc member 42 in a predetermined direction at a predetermined rotation speed. As a result, the fiber bundles F supplied from the helical winding unit 4b are wound onto the first jig mandrel MJ1 at predetermined winding angles (see FIG. 12(c)). After the fiber bundles F supplied from the helical winding unit 4a are wound onto the first jig mandrel MJ1, the winding of the fiber bundles F onto the mandrel M1 starts (see FIG. 12(c)). Therefore, there is no need to perform yarn placement onto the mandrel M1. This makes it possible to avoid erroneous entrance of the leading end portions of the fiber bundles F into the mandrel M1**.** The winding angle of the fiber bundle F wound onto the mandrel M1 before thickening is substantially equal to the winding angle of the fiber bundle F wound onto the first jig mandrel MJ1.

The controller 5 moves the moving unit 22A until the rear end portion of the large diameter portion Mh1 reaches a position substantially identical with those of the fiber bundle guides 44 of the helical winding unit 4c. Subsequently, the operator performs yarn placement onto the first jig mandrel MJ1 of the helical winding unit 4c by the same method as the above-described method (see FIG. 12(c)). As described above, the yarn placement onto the first jig mandrel MJ1 is performed, as an example.

### (Method of Winding Fiber Bundles)

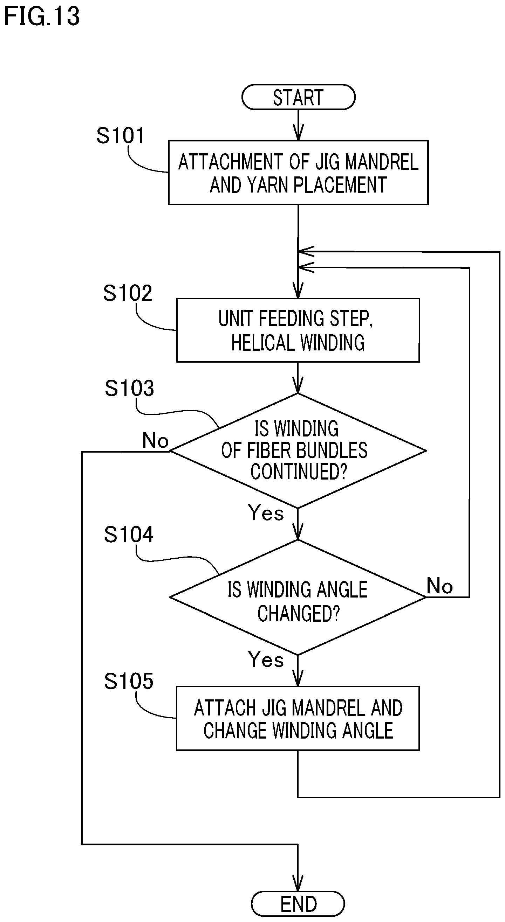

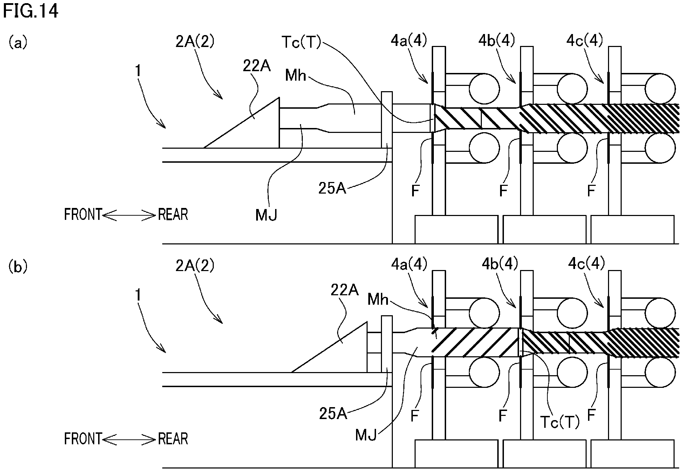

Now, a method of winding fiber bundles F onto each of mandrels M in the filament winding apparatus 1 (i.e., a manufacturing method of a fiber bundle-containing product) will be described with reference to FIG. 13 to FIG. 14(b). FIG. 13 is a flow chart showing the steps of winding fiber bundles onto mandrels M. FIGs. 14(a) and 14(b) are explanatory diagrams showing a change in the winding angle of the fiber bundle F.

To avoid complicating the explanation, detailed explanation regarding the winding of fiber bundles (not illustrated) by the hoop winding unit (hoop-winding step) will be omitted. The hoop-winding step is performed in such a way that, for example, when the helical winding units 4 are not used, hoop-winding is serially performed for the mandrels M while the mandrels M are serially fed to the downstream side in the feeding direction. In the hoop-winding step, the operator may perform the same yarn placement as described above for the jig mandrel MJ.

The following is a more detailed explanation of a step of winding fiber bundles F by using plural helical winding units 4. A step of serially performing the helical winding for the mandrels M by using plural helical winding units 4 will be referred to as a helical-winding step. The number of helical winding units 4 used in the helical-winding step is appropriately adjusted depending on, for example, changes in winding angles and/or increase (thickening) in the diameter of the fiber bundle-containing product. The adjustment of the number of helical winding units 4 to be used is performed in order to substantially equalize the coverage rate of fiber bundles F on the mandrel M per each unit feeding step (for example, to adjust the coverage rate to about 100 percent). However, in the following example, in order not to complicate the explanation, the number of helical winding units 4 to be used is assumed to be constant (not changed). For example, fiber bundles F are supplied by three out of five helical winding units 4. Furthermore, in order to reduce or prevent the complexity of the explanation, the depletion of the fiber bundles F in the supplying bobbins 43 and the associated tasks such as replacement of the supplying bobbins 43 are not taken into consideration.

To begin with, after attaching the first jig mandrel MJ1 to the upstream feeding unit 2A as described above, the operator performs a predetermined operation for the controller 5. The controller 5 controls the paired feeding units 2 to feed the first jig mandrel MJ1 to the downstream side in the feeding direction (jig feeding step). The controller 5 stops the movement of the first jig mandrel MJ1 when the first jig mandrel MJ1 reaches the vicinity of a helical winding unit 4 that requires yarn placement. The operator pulls the fiber bundles F out from the helical winding units 4 to be used, at suitable timings, and serially performs yarn placement onto the first jig mandrel MJ1 (yarn placement step S101; see FIGs. 12(a) to 12(c)).

The operator performs an attachment/detachment operation of attaching or detaching the mandrel M (or jig mandrel MJ) to or from the paired feeding units 2 and an operation to the controller 5 according to need. In accordance with the content of the operation for the controller 5 by the operator, the controller 5 controls the paired feeding units 2 and the helical winding unit 4 so as to wind the fiber bundles F onto the mandrels M belonging to a predetermined mandrel group (S102). To be more specific, while the above-described unit feeding step is being performed, the helical winding unit 4 supplying the fiber bundles F having been placed winds the fiber bundles F serially onto the mandrels M at predetermined winding angles (helical-winding step). In the unit feeding step, as described above, the operator serially aligns the mandrels M in the mandrel axial direction and connects them so as not to be relatively rotatable (connecting step).

While the unit feeding step is being performed, the operator serially detaches, from the downstream feeding unit 2B, the jig mandrel MJ or the mandrel M having been fed to the downstream end in the feeding direction. Before detaching the jig mandrel MJ from the downstream feeding unit 2B, the operator cuts each of the fiber bundles F wound onto the jig mandrel MJ, by using an unillustrated cutter. At this stage, the operator fixes an end portion of each fiber bundle F, which extends toward the downstream side from the rear end portion of the mandrel M provided immediately upstream of the jig mandrel MJ in the feeding direction, to one of the small diameter portion Ma or the small diameter portion Mc of that mandrel M by using the tape T. The one of the small diameter portions is a portion of the mandrel M, which is provided on the downstream side in the feeding direction. Before detaching the mandrel M from the downstream feeding unit 2B, the operator cuts each of the fiber bundles F wound onto the other of the small diameter portions Ma and Mc of the mandrel M, by using an unillustrated cutter. The other of the small diameter portions is a portion of the mandrel M, which is provided on the upstream in the feeding direction. At this stage, the operator fixes an end portion of each fiber bundle F, which extends toward the upstream side from the front end portion of the mandrel M, to the other of the small diameter portion by using the tape T.

Each time the unit feeding step is performed, the operator determines whether to continue the winding of the fiber bundles F onto the mandrel M, based on a workflow (not illustrated) that describes the steps of manufacturing a fiber bundle-containing product, for example (S103). The determination is made when, for example, the last mandrel M onto which the fiber bundles F are wound in each unit feeding step is attached to the upstream feeding unit 2A. When it is determined that the winding of the fiber bundles F onto the mandrel M is not continued (No in S103), for example, the production of the fiber bundle-containing product is finished after the completion of the winding of the fiber bundles F onto the last mandrel M in the last unit feeding step. When it is determined that the winding of the fiber bundles onto the mandrel M is continued, (Yes in S103) the operator performs the determination described below.

The operator determines whether to change the winding angle in the subsequent unit feeding step (S104). If the winding angle is not changed (No in S104), the operator returns to S102 and starts the next unit feeding step. At this stage, yarn placement onto mandrels M serially attached to the upstream feeding unit 2A is not necessary.

If the winding angle is changed (Yes in S104), the operator performs an operation of attaching the jig mandrel MJ to the upstream feeding unit 2A and changing the winding angle, as described below (S105). The helical-winding step before the change in winding angle corresponds to a first helical-winding step of the present invention. The winding angle in the first helical-winding step corresponds to a first winding angle of the present invention. The helical-winding step after the change in winding angle corresponds to a second helical-winding step of the present invention. The winding angle in the second helical-winding step corresponds to a second winding angle of the present invention. The helical-winding step includes the first helical-winding step and the second helical-winding step. The winding angle is determined with reference to not only the magnitude of the inclination angle of a fiber bundle F with respect to a mandrel M, etc. but also whether a fiber bundle F can be wound clockwise or counterclockwise when viewed in the front-rear direction. For example, when the fiber bundle F is wound clockwise when viewed from the front and the inclination angle of the fiber bundle F with respect to the mandrel axial direction is 45 degrees, the winding angle is defined as one of ±45 degrees (for example, +45 degrees). When the fiber bundle F is wound counterclockwise when viewed from the front and the inclination angle of the fiber bundle F with respect to the mandrel axial direction is 45 degrees, the winding angle is defined as the other of ±45 degrees (for example, -45 degrees). A change of the magnitude of the winding angle (e.g., a change from 45 degrees to 5 degrees) and inversion of the sign of the winding angle (e.g., from +45 degrees to -45 degrees) are encompassed in a change of the winding angle.

In the process of changing the winding angle, to begin with, the operator attaches an appropriate jig mandrel MJ (detailed later) to the upstream feeding unit 2A, and connects that jig mandrel MJ to the mandrel M on the most upstream side in the feeding direction so that the mandrel M is relatively non-rotatable. The most upstream mandrel M is the mandrel M onto which plural fiber bundles F are wound at the end of the first helical-winding step. This mandrel M is equivalent to the first mandrel of the present invention. Subsequently, the operator operates the controller 5 to feed the jig mandrel MJ to the helical winding unit 4 (helical winding unit 4a in FIG. 14(a)) that supplies a fiber bundle F that requires a change in winding angle. In this way, the step of feeding the jig mandrel MJ is equivalent to a winding angle change jig feeding step of the present invention.

Subsequently, the operator fixes an intermediate part of each of the fiber bundles supplied from the helical winding unit 4a to the large diameter portion Mh of the jig mandrel MJ with a tape T (see a tape Tc in FIG. 14(a)) (winding angle change fixing step). Thereafter, the controller 5 controls the paired feeding units 2 while rotating the disc member 42 of the helical winding unit 4a at a different rotation speed from the disc members 42 of other helical winding units 4. This rotation speed is a concept encompassing not only the speed of rotation but also the direction of rotation. This causes the winding angle on the upstream side of the tape Tc in the feeding direction to be different from the winding angle on the downstream side of the tape Tc in the feeding direction (see FIG. 14(b)). By serially performing the same operation for the other helical winding units 4, the winding angles of all fiber bundles F are changed on the jig mandrel MJ. At an appropriate timing, the operator connects one of the mandrels M to the jig mandrel MJ so as not to be relatively rotatable (winding angle change connecting step). The one mandrel M is the mandrel M onto which plural fiber bundles F are wound first in the second helical-winding step. The one mandrel M corresponds to the second mandrel of the present invention. Thereafter, the operator causes the filament winding apparatus 1 to perform the next unit feeding step. In this way, the unit feeding step is repeated while the winding angles of the fiber bundles F are changed.

### (Change of Angle of Mandrel)

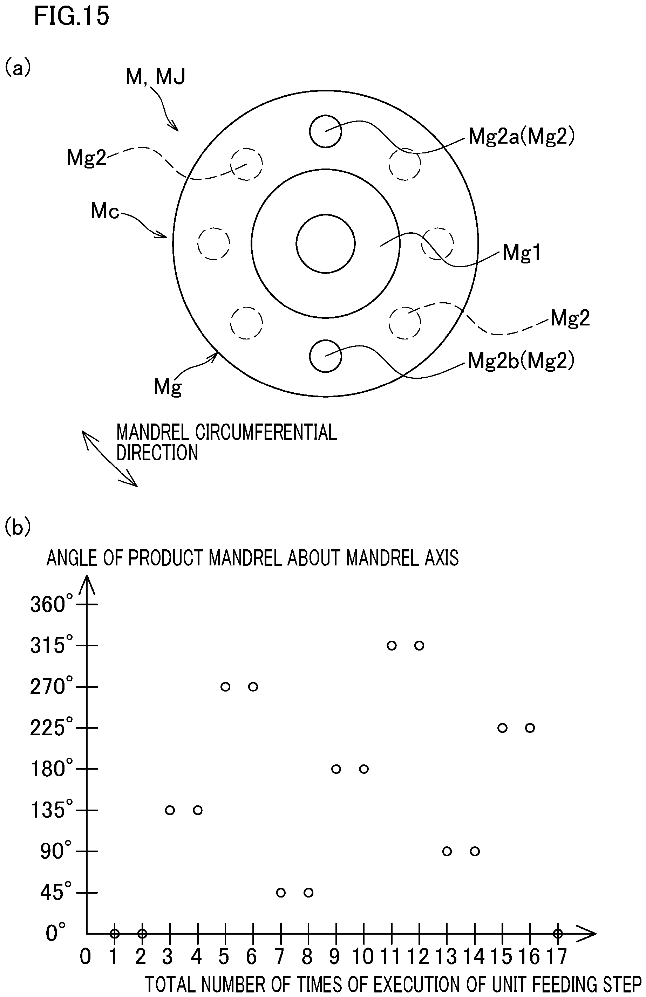

Subsequently, the following describes a change of an angle of the mandrel M about the mandrel axial center, with reference to FIG. 15(a) and FIG. 15(b). FIG. 15(a) is an explanatory diagram showing a change of the angle of the mandrel M about the mandrel axial center. FIG. 15(b) is a graph illustrating the change in angle. The horizontal axis of the graph represents the total number of times of execution of the unit feeding step. The vertical axis of the graph represents the angle of the mandrel M about the mandrel axial center.

As described above, in the filament winding apparatus 1, plural mandrels M are held and aligned in a substantially horizontal direction, and are supported from below by the mandrel supporter 45. With this arrangement, fiber bundles F which are generally softer than the mandrel M are pushed from below by the mandrel supporter 45, and hence the fiber bundles F wound onto the mandrel M tend to be distorted. There is therefore a risk of deformation of the product. Due to this, in order to reduce or prevent the deformation of the product, it is preferable to implement the following approach.

As described above, the angles of the mandrels M about the mandrel axial centers are changeable in units of 45 degrees with respect to the paired feeding units 2, when viewed in the front-rear direction (see FIG. 15(a)). Therefore, the operator changes the angles of the mandrels M about the mandrel axial centers each time the unit feeding step is executed for a predetermined first number of times. The first number of times is a predetermined number of times, which is once or more. For convenience of explanation, an angle about the mandrel axial center will be defined as described below. As indicated by a solid line in FIG. 15(a), when a positioning pin Mg2a is positioned directly above a protruding portion Mg1 and a positioning pin Mg2b is positioned directly below the protruding portion Mg1, the angle about the mandrel axial center is defined as 0 degree. Furthermore, for example, when the positioning pin Mg2a is tilted by 45 degrees clockwise from the position directly above the protruding portion Mg1 when viewed from the front, the angle about the mandrel axial center is defined as 45 degrees. For example, as indicated by a dashed line in FIG. 15(a), the angular position of the positioning pin Mg2 about the mandrel axial center can be changed in 45-degree increments. The range of angles about the mandrel axial center is defined, for example, as a range equal to or greater than 0 degree and less than 360 degrees. In this way, it is possible to change the angle of the mandrel M about the mandrel axial center in 45-degree increments from 0 degree to 360 degrees (in the present embodiment, to 315 degrees in a strict sense).

When, for example, the first number of times is set at two, the operator changes the angle of the mandrel M about the mandrel axial center by a predetermined angle that is not a multiple of 360 degrees each time the unit feeding step is performed twice, as shown in the graph in FIG. 15(b), for example. The predetermined angle is also referred to as "change angle". The change angle is, for example, preferably identical between the mandrels M in one unit feeding step. In the present embodiment, the predetermined angle (change angle) is 135 degrees. It should be noted that the operator changes the angles of the mandrels M about the mandrel axial centers from 270 degrees to 45 degrees, after, for example, the sixth unit feeding step is executed in the present embodiment. This angle, 45 degrees, is an angle calculated by adding 135 degrees to 270 degrees and subtracting 360 degrees from the resultant 405 degrees.

In this way, as the angles of the mandrels M about the mandrel axial centers are changed, the position where the fiber bundle-containing product is supported from below by the mandrel supporter 45 can be changed in the mandrel circumferential direction. In other words, it is possible to reduce or prevent fiber bundles F deposited at the same position of each mandrel M in the mandrel circumferential direction from being repeatedly pressed from below by the mandrel supporter 45.

### (Appropriate Jig Mandrel)

The above-described "appropriate jig mandrel MJ" will be described. While no illustration is provided, due to the repetition of the unit feeding step, fiber bundles F are wound onto the mandrels M belonging to the predetermined mandrel group so that plural layers of the fiber bundles F are formed on the mandrels M. As a result, the diameter of the fiber bundle-containing product, which includes the fiber bundles F would on the plural mandrels M, increases (thickening). If a narrow first jig mandrel MJ1 is used at the time of, for example, changing the winding angle while the fiber bundle-containing product has been thickened, the following problem may occur. That is to say, if the diameter of the first jig mandrel MJ1 is significantly different from the diameter of the fiber bundle-containing product, there is a possibility that the winding angle of the fiber bundle F wound onto the fiber bundle-containing product may deviate from the target angle, even if the winding angle of the fiber bundle F wound onto the first jig mandrel MJ1 is substantially identical with the target angle. The reason for this is as follows. When the diameter of the jig mandrel MJ is different from the diameter of the fiber bundle-containing product, the circumferential speed of the fiber bundle guides 44 of the helical winding unit 4 relative to the jig mandrel MJ and the circumferential speed relative to the fiber bundle-containing product are different from each other. Due to this, there is a possibility that the winding angle of the fiber bundle F wound onto the fiber bundle-containing product may differ significantly from the winding angle of the fiber bundle F wound onto the first jig mandrel MJ1.

Therefore, it is preferable to implement the following approach in order to reduce or prevent the deviation of the winding angle of the fiber bundle F wound onto the fiber bundle-containing product from the target angle. In other words, if the unit feeding step is executed more than a predetermined second number of times after S101, for example, when the winding angle is changed, the operator preferably attaches the second jig mandrel MJ2 to the upstream feeding unit 2A. In this case, the difference between the diameter of the second jig mandrel MJ2 and the diameter of the fiber bundle-containing product is smaller than the difference between the diameter of the first jig mandrel MJ1 and the diameter of the fiber bundle-containing product. This makes it easy to cause the winding angle of the fiber bundle F on the second jig mandrel MJ2 to substantially match the winding angle of the fiber bundle F on the thickened fiber bundle-containing product.

As described above, after the leading end portion of each of the fiber bundles F is fixed to the jig mandrel MJ, the mandrels M are connected with each other so as not to be rotatable relative to each other on the upstream in the feeding direction of the jig mandrel MJ, and are serially fed to the downstream side in the feeding direction. The helical-winding is performed for these mandrels M that are serially fed. In this way, it is possible to serially wind the fiber bundles F onto each of the mandrels M, while avoiding contamination of a product formed by winding the fiber bundles F onto the mandrels M with the leading end portions of the fiber bundles F. Therefore, in the filament winding apparatus 1 that continuously feeds the mandrels M and applies helical winding to the mandrels M, it is possible to avoid the contamination of the product with foreign matters.

A manufacturing method of manufacturing a fiber bundle-containing product includes a winding angle change jig feeding step, a winding angle change fixing step, and a winding angle change connecting step. With this arrangement, intermediate parts of the fiber bundles F are fixed to the jig mandrel MJ while the winding angles are changed. Therefore, it is possible to avoid the intermediate part of the fiber bundle F, which has been bent for the purpose of changing the winding angle, from entering the product.

Furthermore, in the manufacturing method for manufacturing the fiber bundle-containing product, each time the unit feeding step is performed for the predetermined first number of times, the angles of the mandrels M about the axes are changed for a predetermined angle that is different from a multiple of 360 degrees, in the next unit feeding step. On this account, each time the unit feeding step is executed for the first number of times, the position where the fiber bundle-containing product is supported from below by the mandrel supporter 45 can be changed in the mandrel circumferential direction. In other words, it is possible to reduce or prevent fiber bundles F deposited at the same position of the mandrel M in the mandrel circumferential direction from being repeatedly pressed from below by the mandrel supporter 45. Therefore, it is possible to reduce or prevent variations in degree of deformation in the mandrel circumferential direction between the fiber bundles F. It is therefore possible to reduce or prevent the deformation of the product.

When the jig mandrel MJ is used while the number of times of execution of the unit feeding step is equal to or larger than the predetermined second number of times, the second jig mandrel MJ2 that is thicker than the first jig mandrel MJ1 is attached to the upstream feeding unit 2A. This makes it easy to cause the winding angle of the fiber bundle F on the second jig mandrel MJ2 to substantially match the winding angle of the fiber bundle F on the thickened fiber bundle-containing product. On this account, it is possible to arrange the winding angle of the fiber bundle F wound onto the fiber bundle-containing product to be as close to the target angle as possible.

The following will describe modifications of the above-described embodiment. The members which are identical with those in the above-described embodiment will be denoted by the same reference numerals, and the explanations thereof are not repeated.

(1) In the embodiment above, each time the unit feeding step is executed for the predetermined first number of times, the angles of the mandrels M about the mandrel axial center are changed by 135 degrees. However, the disclosure is not limited to this. The above-described change in angle may be any angle other than 135 degrees (e.g., 45 degrees, 90 degrees, 180 degrees, etc.). Alternatively, the angular interval between the positioning holes Me2 about the mandrel axial center may be other than 45 degrees. Alternatively, such an angle change about the mandrel axial center may not be performed.
(2) In the embodiment above, the jig mandrel MJ is arranged to have the small diameter portions Ma and Mc in the same manner as the mandrel M. However, the disclosure is not limited to this. The jig mandrel MJ may have a small diameter portion (not illustrated) that is different from the small diameter portions Ma and Mc of the mandrel M in, for example, shape. The shape of each of the small diameter portions Ma and Mc of the mandrel M is not limited to the above-described shape.
(3) In the above embodiment, the filament winding apparatus 1 includes the first jig mandrel MJ1 and the second jig mandrel MJ2 as the jig mandrels MJ. The number of jig mandrels MJ, however, is not limited to this. For example, at least one jig mandrel that is thicker than the second jig mandrel MJ2 may be provided. Alternatively, the filament winding apparatus 1 may have only the first jig mandrel MJ1 as the jig mandrel MJ.
(4) In the embodiment above, the intermediate part of each of the fiber bundles F is fixed to the jig mandrel MJ when the winding angle of the fiber bundle F wound onto the mandrel M is changed. However, the disclosure is not limited to this. For example, the fiber bundles F supplied from the helical winding unit 4 may be cut each time the unit feeding step is completed. When the jig mandrel MJ is newly sent to the helical winding unit 4, the winding angle may be changed as the leading end portion of each of the fiber bundles F is fixed to the jig mandrel MJ. However, in this case, the production efficiency decreases.
(5) In the embodiment above, the mandrel M and the jig mandrel MJ have the small diameter portions Ma and Mc. However, the disclosure is not limited to this. The mandrel M may have end portions (not illustrated) that are substantially identical in diameter with the large diameter portion Mb, in place of the small diameter portions Ma and Mc. The jig mandrel MJ may have end portions (not illustrated) that are substantially identical in diameter with the large diameter portion Mh, in place of the small diameter portions Ma and Mc.
(6) In the embodiment above, the disc member 42 and the fiber bundle guide 44 may be arranged to be rotatable together about the mandrel axial center. However, the disclosure is not limited to this. The disc member 42 and the fiber bundle guide 44 may not be rotatable about the mandrel axial center. In this case, the paired feeding units 2 may be arranged to move the mandrels M in the feeding direction while rotating them about the mandrel axial center. However, in this case, it is not possible to differentiate the winding angles of the fiber bundles F on the mandrels M between the helical winding units 4 that are simultaneously supplying the fiber bundles F.
(7) In the embodiment above, the filament winding apparatus 1 includes five helical winding units 4. However, the number of the helical winding units 4 is not limited to this. The filament winding apparatus 1 may have the helical winding units 4, the number of which is less than five or more than five. The filament winding apparatus 1 may have plural hoop winding units 3.
(8) The positional relationship between the hoop winding unit 3 and the helical winding units 4 in the mandrel axial direction is not limited to the above-described positional relationship. For example, the hoop winding unit 3 may be provided forward of the helical winding units 4.
(9) In the embodiment above, the fiber bundles are impregnated with resin before wound onto the mandrel M. However, the disclosure is not limited to this. For example, after fiber bundles not impregnated with resin are wound onto the mandrel M, the fiber bundles wound onto the mandrel M may be impregnated with resin.

### [Reference Signs List]

1 filament winding apparatus
2 feeding unit
4 helical winding unit
45 mandrel supporter
F fiber bundle
M mandrel (product mandrel)
MJ jig mandrel
MJ1 first jig mandrel
MJ2 second jig mandrel

## Claims

1. A manufacturing method of manufacturing fiber bundle-containing products including fiber bundles in a filament winding apparatus configured to wind the fiber bundles onto each of mandrels,
the filament winding apparatus including: a jig mandrel which is shorter than the product mandrels in a predetermined mandrel axial direction; a feeding unit which is capable of serially feeding the jig mandrel and the product mandrels aligned in the mandrel axial direction and connected, from the upstream side to the downstream side in a predetermined feeding direction that is along the mandrel axial direction; and helical winding units which are aligned in the mandrel axial direction and each of which is capable of helical-winding the fiber bundles onto the jig mandrel and the product mandrels,
the manufacturing method comprising: a jig feeding step of attaching the jig mandrel to the feeding unit and feeding the jig mandrel to a predetermined helical winding unit among the helical winding units;
a yarn placement step of fixing a leading end portion of each of the fiber bundles fed from the predetermined helical winding unit to the jig mandrel, after the jig feeding step;
a connecting step of serially aligning the product mandrels in the mandrel axial direction and connecting the product mandrels so as not to be relatively rotatable on the upstream side in the feeding direction of the jig mandrel, after the jig feeding step; and
a helical-winding step of serially performing helical winding for the product mandrels by the helical winding units, while serially feeding the product mandrels connected in the connecting step to the downstream side in the feeding direction, after the yarn placement step.

2. The manufacturing method of manufacturing fiber bundle-containing products according to claim 1, wherein,
the helical-winding step includes:
a first helical-winding step of winding the fiber bundles onto the product mandrels at a predetermined first winding angle; and a second helical-winding step of winding the fiber bundles onto the product mandrels at a second winding angle that is different from the first winding angle,
the manufacturing method further comprising: a winding angle change jig feeding step of connecting the jig mandrel to an upstream end in the feeding direction of a first mandrel onto which the fiber bundles are wound last in the first helical-winding step among the product mandrels so that the jig mandrel and the first mandrel are relatively non-rotatable, and feeding the jig mandrel to the downstream side in the feeding direction;
a winding angle change fixing step of fixing an intermediate part of each of the fiber bundles to the jig mandrel, after the winding angle change jig feeding step; and
a winding angle change connecting step of connecting the jig mandrel with a second mandrel onto which the fiber bundles are wound first in the second helical-winding step among the product mandrels so that the jig mandrel and the second mandrel are relatively non-rotatable.

3. The manufacturing method of manufacturing fiber bundle-containing products according to claim 1 or 2, wherein,
the feeding direction includes a horizontal component,
the filament winding apparatus includes a mandrel supporter which supports an intermediate part in the mandrel axial direction of each of the product mandrels that are connected in the mandrel axial direction, and
each time a unit feeding step of feeding a mandrel group including the product mandrels once from an upstream end to a downstream end in the feeding direction is performed for a predetermined first number of times which is at least once, angles of the product mandrels about the axes are changed for a predetermined angle that is different from a multiple of 360 degrees, in the next unit feeding step.

4. The manufacturing method of manufacturing fiber bundle-containing products according to any one of claims 1 to 3, wherein,
in the jig feeding step, a predetermined first jig mandrel is used as the jig mandrel, and
after the jig feeding step, the unit feeding step of feeding the mandrel group including the product mandrels once from the upstream end to the downstream end in the feeding direction is performed at least for a predetermined second number of times, and then a second jig mandrel that is thicker than the first jig mandrel is attached to the feeding unit.

5. A filament winding apparatus which is configured to wind fiber bundles onto each of mandrels, comprising:
a jig mandrel which is shorter than the product mandrels in a predetermined mandrel axial direction;
a feeding unit which is capable of serially feeding the jig mandrel and the product mandrels aligned in the mandrel axial direction and connected, from the upstream side to the downstream side in a predetermined feeding direction that is along the mandrel axial direction; and
helical winding units which are aligned in the mandrel axial direction and each of which is capable of helical-winding the fiber bundles onto the jig mandrel and the product mandrels.
